# EUROPEAN PATENT APPLICATION

(11) **EP 4 156 504 A1**
(43) Date of publication of application: **29.03.2023**
(21) Application number: 21199509.7
(22) Date of filing: 28.09.2021
(51) Int. Cl.: H02S 30/00, F24S 25/35, F24S 25/37

(54) **SOLAR PANEL SUPPORT RAIL**

(71) Applicant: IMS Solar B.V., 1817 BH Alkmaar (NL)
(72) Inventor: SIE, David Koen Bing, Heiloo (NL)
(74) Representative: EP&C

(57) **Abstract**

Solar panel support rail for supporting solar panels and fixating solar panels to a surface, wherein when seen in cross sectional view the solar panel support rail comprises;
- a connector wall portion that comprises:
∘ at least one bracket hooking member located on a first side of the connector wall portion and being configured to hook on a rail bracket, wherein the bracket hooking member defines a recess, and
∘ a stop facing away from the recess, the stop being configured to abut against a retainer member of the rail bracket,

- a support wall portion that is connected to the connector wall portion on a second side of the connector wall portion and that protrudes upwards and away from the connector wall portion,
- a retainer wall portion, that is connected to the support wall portion, wherein the retainer wall portion is configured to limit a movement of a solar panel away from the connector wall portion,
- a first coupling member which is positioned at a first distance from the support wall portion, wherein a connector space is present between the first coupling member and the support wall portion and wherein said connector space is configured to accommodate a connecting piece,
wherein the first coupling member extends upward from the connector wall portion over a second distance in a direction towards the retainer wall,
wherein the first coupling member is plastically deformable and wherein a local portion can be deformed to locally reduce the first distance.

## Description

### FIELD OF THE INVENTION

The field of the invention relates to the installation of UV solar panels on structures and surfaces.

### BACKGROUND OF THE INVENTION

UV solar energy provides an increasing portion of global energy demand. The UV solar panels which convert solar energy into electricity are often installed on roofs. There is an ongoing need to make UV solar energy financially more attractive in terms of cost/benefit. The efficiency of the installation of UV solar panels on roofs and other target surfaces is an important aspect of the financial picture. For this reason there is a demand for installation methods and devices with which UV solar panels can be installed quickly and at low costs. Several solutions have been created and are available on the market. Naturally, other requirements such as strength and also safety during installation also apply.

A known solution is to mount brackets to a roof or other target surfaces. Support rails are then mounted to the brackets. The support rails typically extend horizontally. Subsequently, the UV solar panels are mounted to the rails. It was recognized in the present invention that the known rails and brackets are rather cumbersome which results in a relatively slow installation process which in turn results in relatively high costs.

### OBJECT OF THE INVENTION

It is an object of the invention to provide a solar panel support rail and a method for installing solar panels with which UV solar panels can be installed relatively quickly and at relatively low costs.

It is an object of the invention to provide a solar panel support rail and a method for installing such rails which allows connecting of at least two of said solar panel support rails to one another in an end-to-end relationship relatively quickly, with relatively simple tools and at relatively low costs.

### SUMMARY OF THE INVENTION

In order to meet at least one object of the invention, the invention relates to a solar panel support rail for supporting solar panels and fixating solar panels to a surface, wherein when seen in cross sectional view the solar panel support rail comprises;
- a connector wall portion that comprises:
   ∘ at least one bracket hooking member located on a first side of the connector wall portion and being configured to hook on a rail bracket, wherein the bracket hooking member defines a recess, and
   ∘ a stop facing away from the recess, the stop being configured to abut against a retainer member of the rail bracket,
- a support wall portion that is connected to the connector wall portion on a second side of the connector wall portion and that protrudes upwards and away from the connector wall portion,
- a retainer wall portion, that is connected to the support wall portion and comprises a first part that protrudes away from the support wall portion on a first side of the support wall portion and comprises a second part that protrudes away from the support wall portion on a second side of the support wall portion, wherein the retainer wall portion is configured to limit a movement of a solar panel away from the connector wall portion,
- a first coupling member which is positioned at a first distance from the support wall portion, wherein a connector space is present between the first coupling member and the support wall portion and wherein said connector space is configured to accommodate a connecting piece,
   wherein the first coupling member extends upward from the connector wall portion over a second distance in a direction towards the retainer wall or extends downward from the retainer wall portion over the second distance in a direction towards the connector wall portion,
   wherein the first coupling member is plastically deformable and wherein a local portion of the first coupling member can be deformed towards the support wall portion to locally reduce the first distance, the support wall portion and/or the first coupling member being configured to support a solar panel

By using such a solar panel support rail, a simple connecting piece can be used that is easily fixable to the solar panel support rail without the need for extra parts. Such a solar panel support rail can thus be mounted in a more simple, time-efficient manner and can therefore be cheaper. In particular, two solar panel support rails can be connected to one another in an end-to-end relationship relatively quickly, with relatively simple tools and at low costs. The surface can be any type of roof or support structure.

In an embodiment the solar panel support rail further comprises a second coupling member which extends from the other of the connector wall portion and the retainer wall portion as the first coupling member. The first coupling member and the second coupling member are located on a same side of the support wall portion wherein the connector space is present between the support wall portion and the first and second coupling members.

The presence of a second coupling member further facilitates the placement of a connecting piece in the connector space and also aids in keeping the connecting piece in the connector space.

In an embodiment, the first and/or second coupling member is/are parallel or substantially parallel to the support wall portion. Because the first coupling member must be deformed by reducing the first distance, having the first coupling member extend away from the support wall portion would increase the distance over which it would have to be deformed; this is not beneficial. Having a coupling member extend towards the support wall portion would decrease the thickness of the connecting piece. This would result in a less robust system.

In an embodiment, the first and second coupling members are aligned or substantially aligned. This allows for a connecting piece with substantially equally thick edges. This allows the connecting piece to be placed in a single connector space in different orientations, enabling a faster installation.

In an embodiment, the first coupling member and/or the second coupling member comprise a free end enabling an easier deformation.

In an embodiment, the connector wall portion comprises a least a second bracket hooking member located at a distance from the first hooking member. By having more than one hooking member, rotation around the first hooking member can be prevented, resulting in a more secure solar panel fixation.

In an embodiment, the solar panel support rail further comprises a tool hooking element located on a second side of the connector wall portion. Behind this tool hooking element, a connecting tool can be hooked, wherein the tool hooking element protrudes upwards from the connector wall portion.

Without such a tool hooking element, the first coupling member can also be deformed. However, the tool hooking element, the deforming becomes easier to do, leading to a easier and faster installation.

In an embodiment, the solar panel support rail is made from a piece of metal or polymer, in particular from aluminium, more in particular an extruded aluminium profile.

The invention further relates to an assembly of a connecting piece for connecting two solar panel support rails according to any of the solar panel support rail claims and two solar panel support rails according to any of the solar panel support rail claims, wherein the connecting piece fits in the connector space and:
- has a thickness substantially corresponding to the first distance,
- has a height larger than the difference between a support wall portion height and a height of the first coupling member and/or a height of the second coupling member,
- has a length larger than its height,
   wherein the connecting piece is substantially plate shaped, being flat and elongate and,
   wherein the connecting piece defines at least one recess or hole at least partially located on one side of a middle of the length, or wherein the connecting piece is at least locally made of a weaker material than a solar panel support rail material, allowing a locally plastically deformed portion of the first and/or second coupling member to be pushed into the recess or hole or into the weaker material, thereby fixating the connecting piece to the first and second solar panel support rails.

By using such a connection piece, the solar panel support rails can easily be connected. The recess or hole provides a location where the first coupling member can be deformed into the connecting piece. In doing so, lateral movement of the connecting piece and the solar panel support rail is inhibited. This is also possible when the first coupling member is deformed into the material of the connecting piece.

In an embodiment, the height substantially corresponds to a distance between the retainer wall portion and the connector wall portion of the rail. In doing so, play between the connecting piece and the solar panel support rail is minimized forming a better connection.

In an embodiment, the connecting piece defines at least a second recess or hole at least partially located on an opposite side of the middle of the length as the first recess or hole. In doing so, the connecting piece can be placed in multiple orientations in the connector spaces of different solar panel support rails and can always be connected to at least one solar panel support rail.

In an embodiment, the at least one recess or hole is located above or below a middle of the height. This allows a better junction with the coupling member of the solar panel support rail.

In an embodiment, the assembly further comprises a connecting tool for deforming at least a first coupling member of a solar panel support rail according to any of claims 1-8 into at least one recess or hole of a connecting piece according to any of claims 9-12, wherein the connecting tool comprises:
- a handle portion,
- a hook, and
- a deforming part,
wherein the hook is hookable behind the tool hooking element of the connector wall portion of the solar panel support rail, and wherein the movement of the handle portion leverages the deforming part against the first or second coupling member and locally deforms the first or second coupling member into the recess or hole of the connecting piece, the hook being a pivot point in order to locally deform the first or second coupling member.

Such a tool facilitates the relatively easy deformation of the coupling member into the connecting piece without having the need for power tools or large amount of physical force.

In an embodiment, a first end of the connecting piece is located in the connector space of the first solar panel support rail and a second end of the connecting piece is located in the connector space of the second solar panel support rail,
wherein the first coupling member of the first solar panel support rail or the first coupling member of the second solar panel support rail is locally deformed into the at least one first recess or hole defined by the connecting piece, thereby fixing the first solar panel support rail or the second solar panel support rail to the connecting piece, and/or
wherein the second coupling member of the first solar panel support rail or the first coupling member of the second solar panel support rail is locally deformed into the at least second recess or hole defined by the connecting piece fixing the first solar panel support rail or the second solar panel support to the connecting piece.

In doing so, two solar panel support rails can be connected with each other in a manner where they are fully fixed with respect to each other, i.e. when each solar panel support rail has a coupling member that is deformed into the connecting piece, and/or the connecting piece can be fixed to either one of the two solar panel support rails and allows the other to translate while the connecting piece is located in its connector space.

In a further aspect, the invention relates to a method of installing solar panels, the method comprising;
- mounting a plurality of rail brackets on a target surface,
- placing at least a first and a second solar panel support rail according to any of claims 1-8 onto the rail brackets,
wherein the first and second solar panel support rail are positioned end-to-end, wherein a connecting piece according to any of claims 9-14 is inserted into the respective connector spaces of the first and a second solar panel support rail, and wherein the first coupling member of the first solar panel support rail is locally plastically deformed and pressed into the connecting piece using a connecting tool according to claim 13 to fix the connecting piece to the first solar panel support rail.

The invention will be more clearly understood from the following description of some preferred embodiments, which are given by way of example only, with reference to the accompanying drawings.

### BRIEF DESCRIPTION OF THE DRAWINGS

Figure 1A and 1B show a roof with two solar panels supported by solar panel support rails and rail brackets and a close-up thereof.
Figures 2A, 2B, and 2C provide an exploded view, an ISO view and a side view of a rail bracket.
Figure 3A and 3B show different views of solar panel support rail.
Figures 4A, 4B, and 4C show a solar panel support rail and a rail bracket.
Figures 5A, 5B, and 5C show solar panel support rails together with a connecting piece.
Figures 6A, 6B, and 6C show a connecting piece and solar panel support rails in different views.
Figures 7A and 7B show solar panel support rails together with a connecting piece and a connecting tool.
Figures 8A and 8B show solar panel support rails together with a connecting piece and a connecting tool deforming a coupling member.

### DETAILED DESCRIPTION OF THE DRAWINGS

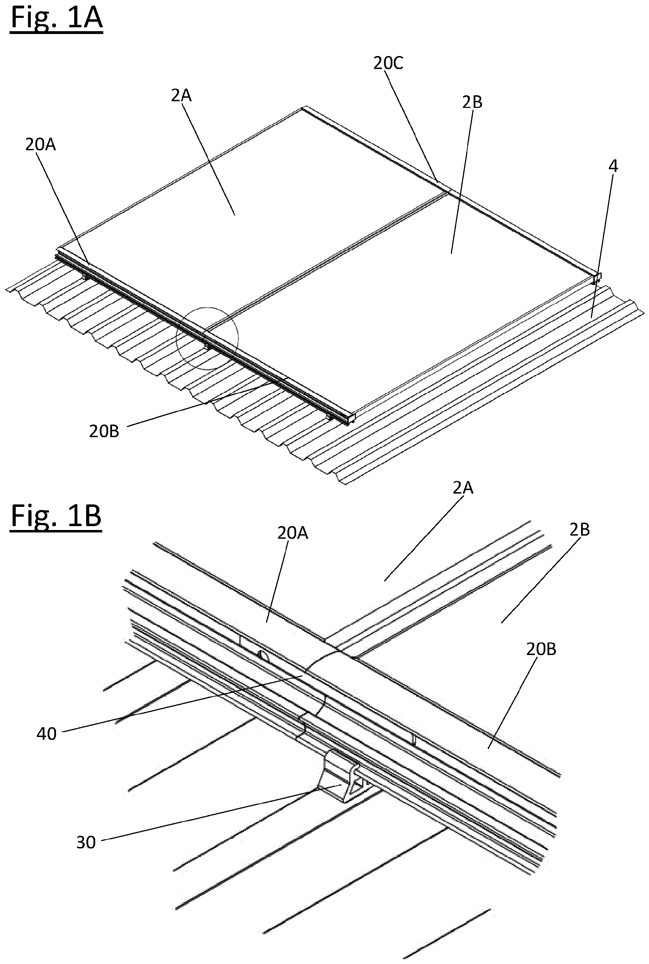

Figures 1A and 1B show a system using a plurality of solar panel support rails 20A, 20B, 20C that are used to retain solar panels 2A, 2B on structures or target surfaces 4 such as roofs, etc. Because it may desirable to cover large areas with solar panels and rails that span these dimensions are cumbersome to move and install, they are divided in several solar panel support rails 20A, 20B, 20C. Each rail has a length which allows easy handling and installation. At their ends, these solar panel support rails may be joined using connecting pieces 40 that keep two solar panel support rails together and aligned. To keep the solar panel support rails, and therewith the solar panels attached to the structure of target surface, the solar panel support rail 20B is retained by a rail bracket 30 that is fixated with respect to the structure or target surface 4.

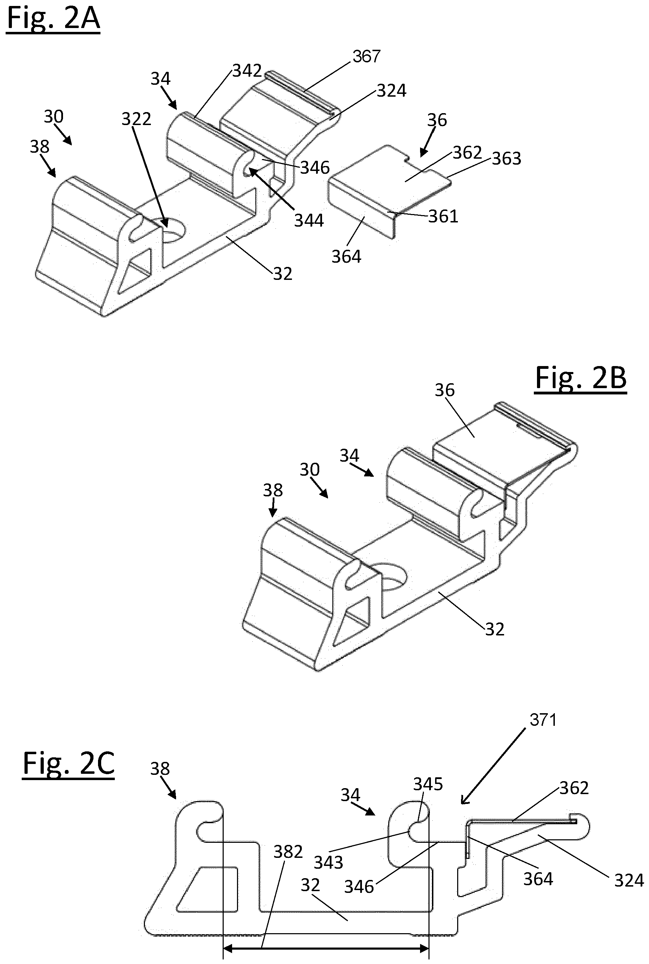

Turning to figures 2A, 2B, and 2C, a rail bracket 30 for retaining a solar panel support rail 20 comprises a main body 32 that can be fixed to the structure or target surface 4 via a hole 322 that it defines. For example, it can be fixed using a bolt or a rivet which is inserted into the hole. A first hook element 34 is connected to the main body and comprises a free hook end 342 that defines a recess 344. The first hook element is configured to accommodate a bracket hooking member 222A (depicted in figured 4A, 4B, and 4C) of the solar panel support rail. To lock the bracket hooking member in the recess 344, the rail bracket further comprises a retainer member 36 that is also connected to the main body 32 and faces the recess.

To allow the bracket hooking member to be placed in the recess, the retainer member 36 comprises a resilient member 362 and a retaining tab 364 that is connected to the resilient member. Here, the resilient member and the retaining tab are integral and the retaining member comprises a curved part 361 that forms a transition between the resilient member and the retaining tab. The retaining tab 364 extends at a substantially right angle to the resilient member, the resilient member being a leaf spring. The resilient member comprises a first end 363 at which it is connected to the main body 32 at a connection point 367 thereof, in particular to a protruding part 324 of the main body. The resilient member extends from the connection at the protruding part towards the first hook element 34. Between the retainer member 36 and the free hook end 342 of the first hook element, an entry gap 371 is defined through which the bracket hooking member may be placed in the recess.

Besides having a first hook element 34, here, the rail bracket 30 also comprises a second hook element 38 that extends away from the main body and is located at a distance 382 from the first hook element 34. The first and second hook element face in the same direction and are configured to allow a first and second bracket hooking member 222A, 222B of the solar panel support rail to slide into the first and second hook element from the same side. When a solar panel support rail 20 is placed onto the rail bracket, the second hook element 38 prevents the solar panel support rail from pivoting around the first hook element. The depicted second hook element has the same feature as the first hook element, but does not have a retainer member.

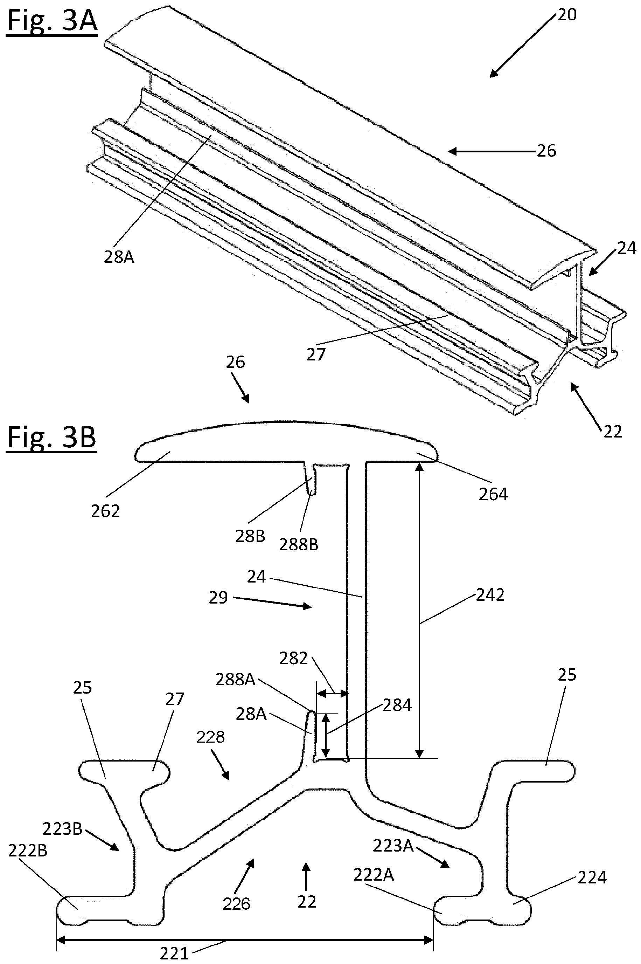

In figures 3A and 3B, a solar panel support rail 20 is shown in an ISO view and in side view. The solar panel support rail comprises a connector wall portion 22, a support wall portion 24, and a retainer wall portion 26. The connector wall portion 22 is configured to work together with the rail bracket 30 to keep the solar panel and the solar panel support rail 20 fixated with respect to the roof. To this end it comprises two bracket hooking members 222A, 222B that are located on a first, lower side 226 of the connector wall portion. The bracket hooking members 222A, 222B are located at a distance 221 from each other and are configured to hook on the rail bracket 30 and define a recess 223A, 223B to this end. Also, the connector wall portion defines a stop 224 that faces away from the recess 223A and that is configured to abut against the retainer member 36 of the rail bracket 30.

On a second, upper side 228 of the connector wall portion, the support wall portion 24 is connected to the connector wall portion 22 at a lower end of the support wall portion and protrudes upwards and away from the connector wall portion.

The retainer wall portion 26 is connected to an upper end of the support wall portion 24. This retainer wall portion comprises a first part 262 that protrudes away from the support wall portion on a first side (left in fig. 3B) of the support wall portion and comprises a second part 264 that protrudes away from the support wall portion on a second side (right in fig. 3B) of the support wall portion. When a solar panel is placed in the solar panel support rail 20 and rests upon a solar panel support surface, the first and second parts of the retainer wall portion 26 prevent the solar panels from moving in a direction away from the connector wall portion. When placing a solar panel into the solar panel support rails, a second solar panel support rail is provided right left of the first solar panel support rail. A right side of the solar panel is first placed under the first part 262 of the right solar panel support rail and a second side is then lowered onto the left solar panel support surface 25 of the left solar panel support rail. Subsequently, the solar panel is moved to the left under the second part 264. The solar panel then rests on the solar panel support surfaces 25 of the solar panel support rails and is kept in place by the second part 264 of a left solar panel support rail and by the first part 262 of the right solar panel support rail.

As shown in figures 1A and 1B, two solar panel support rails 20A, 20B can be connected using a connecting piece 40. This connecting piece can be accommodated by a connector space 29 defined by a first coupling member 28A that is parallel to the support wall portion and the support wall portion 24. The first coupling member is positioned at a first distance 282 from the support wall portion and extends upwards from the connector wall portion 22 over a second distance 284 in a direction towards the retainer wall. This first coupling member 28A is plastically deformable and a local portion 286A of the first coupling member can be deformed towards the support wall portion 24 to locally reduce the first distance. When a solar panel is placed in the solar panel support rail 20, the solar panel can be supported by the support wall portion and/or the first coupling member.

In addition to the first coupling member 28A, the solar panel support rail 20 further comprises a second coupling member 28B which extends from the retainer wall portion and is substantially parallel to the support wall portion 24. The first coupling member and the second coupling member are located on a same side of the support wall portion and, being substantially aligned, the connector space is present between the support wall portion and both the first and second coupling members. While the first coupling member 28A and second coupling member 28B are separate and each comprise a free end 288A, 288B, it would also be possible that they would be an integral part.

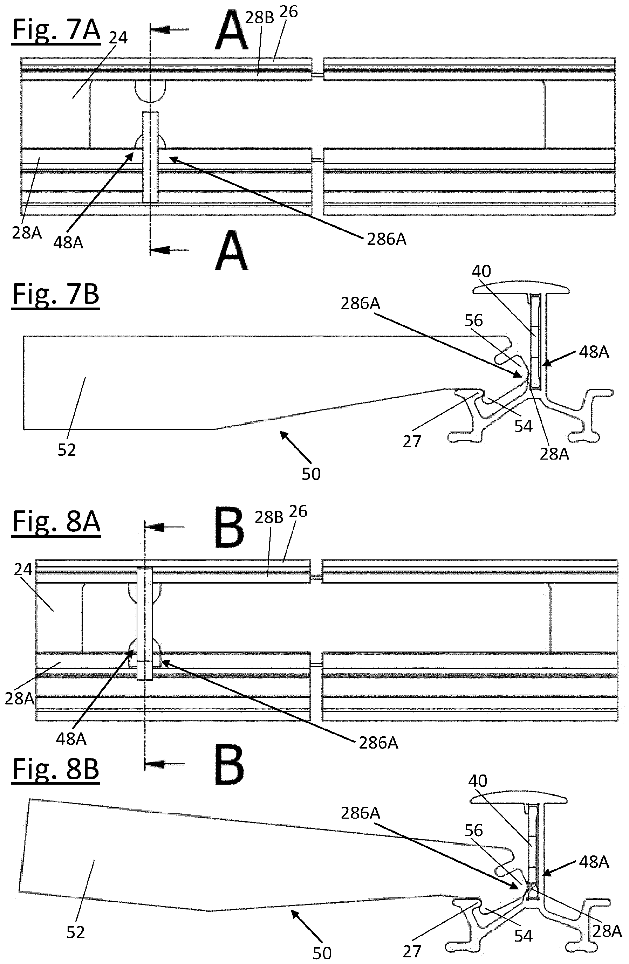

In order to deform the first coupling member 28A, the solar panel support rail 20 comprises a tool hooking element 27 located on the second side 228 of the connector wall portion 22 behind which a connecting tool 50 can be hooked (illustrated in figures 7A, 7B, 8A, and 8B). This tool hooking element protrudes upwards from the connector wall portion 22.

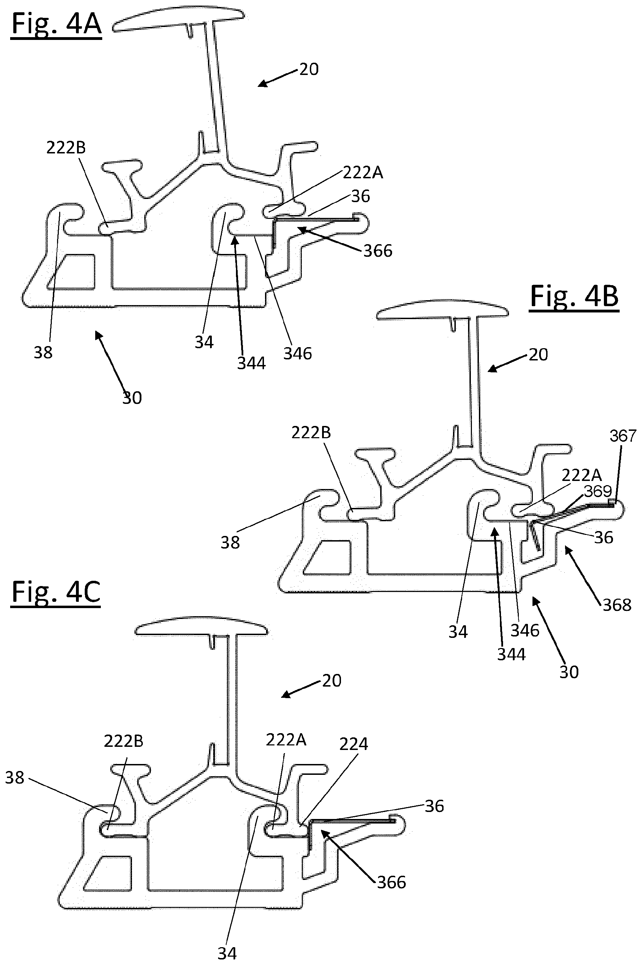

In figures 4A, 4B, and 4C, the solar panel support rail 20 is shown while being placed in the rail bracket 30. As shown moving from figure 4A to 4B to 4C, the retainer member 36 is configured to be moved downward from an initial, rail retaining position 366 in an undeformed state of the resilient member 362 to a rail placement position 368 in a deformed state of the resilient member. In the rail placement position the entry gap is wider than in the rail retaining position and provides access for the bracket hooking member 222A to be positioned in the recess. Subsequently, the retainer member 36 moves from the rail placement position 368 back to the rail retaining position 366 to lock the bracket hooking member 222A in the recess 344 after the bracket hooking member is placed in the recess.

In figure 4B, in the rail placement position 368 the retainer member 36 is substantially flush with an upwardly facing support surface 346 of the first hook element. this facilitates the placement of the solar panel support rail 20. The resilient member provides a sloping guiding surface 369 from the connection point 367 to upwardly facing support surface 346. The sloping guiding surface guides the solar panel support rail into the locking position.

In figure 4C, when the bracket hooking member 222A is located in the recess 344 and the retainer member 36 has moved back to the retainment position 366, the retainer member abuts against the stop 224 of the solar panel support rail.

When the solar panel support rail 20 has been placed in the rail bracket 30, the movement of the bracket hooking members is prevented in four directions:
- a downwardly facing side 345 (depicted in figure 2C) of the first hook element 34 facing the upwardly facing support surface prevents the bracket hooking member from moving away from the main body,
- a side 343 of an upwardly extending portion of the first hook element 34 (depicted in figure 2C) prevents the bracket hooking member from moving away from the retainer member,
- the upwardly facing support surface 346 prevents the bracket hooking member from moving towards the main body,
- the retaining tab 364 prevents the bracket hooking member from moving out of the recess 344.

The solar panel support rail can be removed if desired by pushing the retainer member 36 downward, thereby widening the entry gap and removing the solar panel support rail.

The depicted assembly further comprises a second hook element 38 that accommodates the second hooking member 222B of the solar panel support rail.

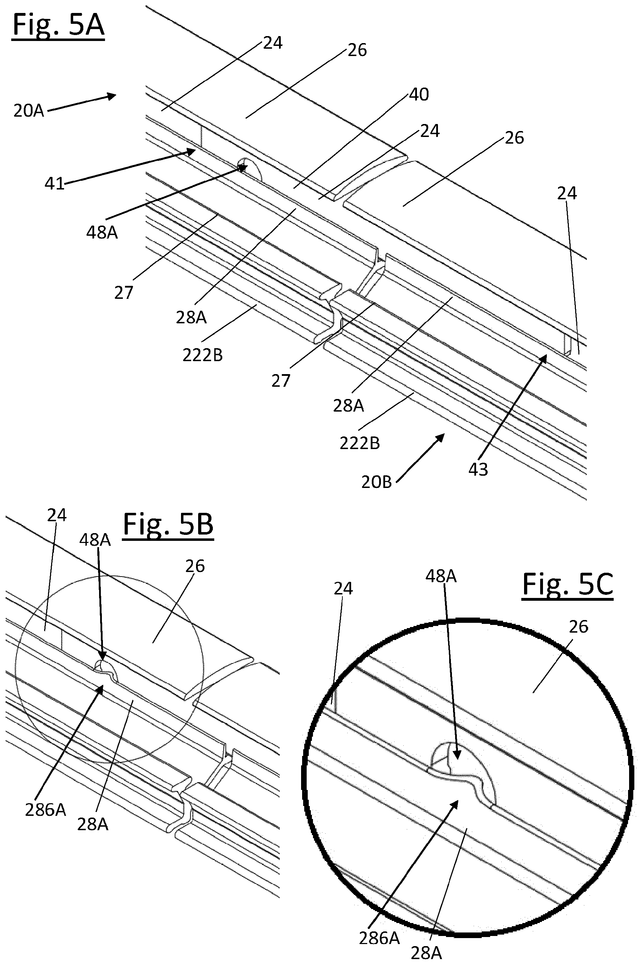

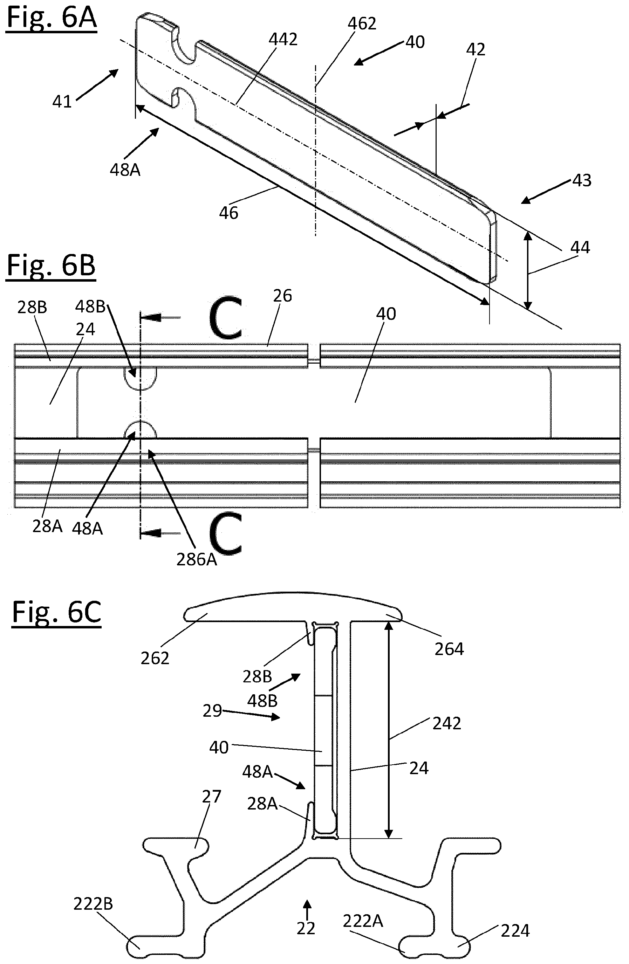

Turning to figures 5A - 6C, two solar panel support rails 20A, 20B are shown in alignment with each other. The depicted assembly further comprises a connecting piece 40 that connects the two solar panel support rails. The connecting piece has a thickness 42 that substantially corresponds to the first distance 282 and has a height 44 than is substantially as high as the support wall portion height 242. Herein, the support wall portion height substantially corresponds to a distance between the retainer wall portion and the connector wall portion of the rail. Therewith, the height 44 is larger than the difference between the support wall portion height and the height 284 of the first coupling member and the height of the second coupling member. The length 46 of the connecting piece is larger than its height 44.

The connecting piece 40, being substantially plate shaped, flat, and elongate, defines two recesses 48A, 48B that are each located on one side of the middle 462 of the height of the connecting piece below and above the middle of the height. In figures 5B and 5C, a locally plastically deformed portion 286A of the first coupling member 28A has been pushed into the recess 48A of the connecting piece and thereby fixates the connecting piece to the first and second solar panel support rails. It would also be possible that, if no recess was present and the connecting piece was made of a weaker material than the first coupling member, the locally deformed portion would have been pushed into the weaker material itself.

The assembly comprises the connecting piece 40 comprising a first end 41 being located in the connector space 29 of the solar panel support rail 20A and a second end 43 being located in the connector space of the solar panel support rail 20B .

To arrive at this assembly, a method for installing solar panels comprises the step of mounting a plurality of rail brackets 30 on a structure or target surface 4 and placing at least a first and second solar panel support rail 20A, 20B onto the brackets (as depicted in figures 4A, 4B, and 4C). As can be seen in figures 7A-8B, the first and second solar panel support rails are positioned end-to-end and the connecting piece 40 has been inserted into the respective connector spaces of the two solar panel support rails.

By hooking a hook 54 of a connecting tool 50 behind the tool hooking element 27 and moving a handle portion 52 of the connecting tool in an upward direction, a deforming part 56 of the connecting tool is leveraged against the first coupling member 28A around the hook that is a pivot point. In doing so, the first coupling member 28A is locally deformed into the recess 48A of the connecting piece 40.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

The mere fact that certain measures are recited in mutually different dependent claims does not indicate that a combination of these measures cannot be used to advantage.

White lines between text paragraphs in the text above indicate that the technical features presented in the paragraph may be considered independent from technical features discussed in a preceding paragraph or in a subsequent paragraph.

## Claims

1. Solar panel support rail (20) for supporting solar panels and fixating solar panels (2) to a surface (4), wherein when seen in cross sectional view the solar panel support rail comprises;
- a connector wall portion (22) that comprises:
∘ at least one bracket hooking member (222A) located on a first side (226) of the connector wall portion and being configured to hook on a rail bracket (30), wherein the bracket hooking member defines a recess (223), and
∘ a stop (224) facing away from the recess, the stop being configured to abut against a retainer member of the rail bracket,
- a support wall portion (24) that is connected to the connector wall portion on a second side (228) of the connector wall portion and that protrudes upwards and away from the connector wall portion,
- a retainer wall portion (26), that is connected to the support wall portion and comprises a first part (262) that protrudes away from the support wall portion on a first side of the support wall portion and comprises a second part (264) that protrudes away from the support wall portion on a second side of the support wall portion, wherein the retainer wall portion is configured to limit a movement of a solar panel away from the connector wall portion,
- a first coupling member (28A) which is positioned at a first distance (282) from the support wall portion, wherein a connector space (29) is present between the first coupling member and the support wall portion and wherein said connector space is configured to accommodate a connecting piece,
wherein the first coupling member extends upward from the connector wall portion over a second distance (284) in a direction towards the retainer wall or extends downward from the retainer wall portion over the second distance in a direction towards the connector wall portion,
wherein the first coupling member is plastically deformable and wherein a local portion (286A) of the first coupling member can be deformed towards the support wall portion to locally reduce the first distance, the support wall portion and/or the first coupling member being configured to support a solar panel.

2. Solar panel support rail according to the preceding claim, wherein the solar panel support rail further comprises a second coupling member (28B) which extends from the other of the connector wall portion and the retainer wall portion as the first coupling member (28A), wherein the first coupling member and the second coupling member are located on a same side of the support wall portion, wherein the connector space is present between the support wall portion and the first and second coupling members.

3. Solar panel support rail according to the preceding claim, wherein the first and/or second coupling member is/are parallel or substantially parallel to the support wall portion.

4. Solar panel support rail according to the preceding claim, wherein the first and second coupling members are aligned or substantially aligned.

5. Solar panel support rail according any of the preceding claims, wherein the first coupling member and/or the second coupling member comprise a free end (288).

6. Solar panel support rail according to any of the preceding claims, wherein the connector wall portion comprises a least a second bracket hooking member (222B) located at a distance (221) from the first bracket hooking member.

7. Solar panel support rail according to any of the preceding claims, further comprising a tool hooking element (27) located on a second side of the connector wall portion, behind which a connecting tool can be hooked, wherein the tool hooking element protrudes upwards from the connector wall portion.

8. Solar panel support rail according to any of the preceding claims, wherein the solar panel support rail is made from a piece of metal or polymer, in particular from aluminium, more in particular an extruded aluminium profile.

9. Assembly of a connecting piece (40) for connecting two solar panel support rails according to any of the preceding claims and two solar panel support rails according to any of the preceding claims, wherein the connecting piece fits in the connector space and:
- has a thickness (42) substantially corresponding to the first distance,
- has a height (44) larger than the difference between a support wall portion height (242) and a height of the first coupling member and/or a height of the second coupling member,
- has a length (46) larger than its height,
wherein the connecting piece defines at least one recess or hole (48A) at least partially located on one side of a middle (462) of the length, or wherein the connecting piece is at least locally made of a weaker material than a solar panel support rail material, allowing a locally plastically deformed portion of the first and/or second coupling member to be pushed into the recess or hole or into the weaker material, thereby fixating the connecting piece to the first and second solar panel support rails.

10. Assembly according to the preceding claim, wherein the height substantially corresponds to a distance between the retainer wall portion and the connector wall portion of the rail.

11. Assembly according to any of claims 9-10, wherein the connecting piece defines at least a second recess or hole (48B) at least partially located on an opposite side of the middle of the length as the first recess or hole.

12. Assembly according to any of claims 9-11, wherein the connecting piece is in particular substantially plate shaped, being flat and elongate.

13. Assembly according to any of claims 9-12, further comprising a connecting tool (50) for deforming at least a first coupling member of a solar panel support rail according to any of claims 1-8 into at least one recess or hole of a connecting piece according to any of claims 9-12, wherein the connecting tool comprises:
- a handle portion (52),
- a hook (54),
- a deforming part (56),
wherein the hook is hookable behind the tool hooking element of the connector wall portion of the solar panel support rail, and wherein the movement of the handle portion leverages the deforming part against the first or second coupling member and locally deforms the first or second coupling member into the recess or hole of the connecting piece, the hook being a pivot point in order to locally deform the first or second coupling member.

14. Assembly according to any of claims 9-13, wherein a first end (41A) of the connecting piece (40) is located in the connector space of the first solar panel support rail and a second end (43) of the connecting piece is located in the connector space of the second solar panel support rail,
wherein the first coupling member of the first solar panel support rail or the first coupling member of the second solar panel support rail is locally deformed into the at least one first recess or hole defined by the connecting piece, thereby fixing the first solar panel support rail or the second solar panel support rail to the connecting piece, and/or
wherein the second coupling member of the first solar panel support rail or the first coupling member of the second solar panel support rail is locally deformed into the at least second recess or hole defined by the connecting piece fixing the first solar panel support rail or the second solar panel support to the connecting piece.

15. Method of installing solar panels, the method comprising
- mounting a plurality of rail brackets (30) on a target surface (4),
- placing at least a first and a second solar panel support rail (20A, 20B) according to any of claims 1-8 onto the rail brackets,
wherein the first and second rail solar panel support rail are positioned end-to-end, wherein a connecting piece (40) according to any of claims 9-14 is inserted into the respective connector spaces of the first and a second solar panel support rail, and wherein the first coupling member of the first solar panel support rail is locally plastically deformed and pressed into the connecting piece using a connecting tool (50) according to claim 13 to fix the connecting piece to the first solar panel support rail.
